## Europäisches Patentamt

## European Patent Office

## Office européen des brevets

(19)

(11) Veröffentlichungsnummer: **0 215 328**
**B1**

(12) **EUROPÄISCHE PATENTSCHRIFT**

(45) Veröffentlichungstag der Patentschrift:
**25.10.89**

(51) Int. Cl.⁴: **B65G 1/20**

(21) Anmeldenummer: **86111582.2**

(22) Anmeldetag: **21.08.86**

(54) Vorrichtung zum Lagern von Teilen im Abstand zueinander, insbesondere zum Lagern von Blechen oder Blechformteilen.

(30) Priorität: **06.09.85 DE 3531800**

(43) Veröffentlichungstag der Anmeldung:
**25.03.87 Patentblatt 87/13**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**DE-A- 3 111 999**
**DE-C- 1 122 000**
**DE-C- 2 930 053**

(73) Patentinhaber: **VEREINIGTE ALUMINIUM-WERKE AKTIENGESELLSCHAFT, Berlin - Bonn Postfach 2468 Georg-von-Boeselager-Strasse 25, D-5300 Bonn 1(DE)**

(72) Erfinder: **Bergheim, Hans, Am Wichelshof 34, D-5300 Bonn 1(DE)**
Erfinder: **Griep, Winfried, Kirchfeldstrasse 1, D-5300 Bonn 3(DE)**

(74) Vertreter: **Müller-Wolff, Thomas, Dipl.-Ing., c/o Vereinigte Aluminium-Werke AG Patentabteilung Postfach 2468, D-5300 Bonn 1(DE)**

ACTORUM AG

## Beschreibung

Die Erfindung betrifft eine Vorrichtung zum Lagern von Teilen im Abstand zueinander, insbesondere zum Lagern von Blechen oder Blechformteilen, bestehend aus mindestens einer Säule, Tragarm o.dgl., die um im wesentlichen waagerechte Lagerbolzen schwenkbare, als Tragarme dienende Hebel aufweist, wobei ein beim Einlagern eines Teils in Ruhelage befindlicher Hebel von einem in Beschickungsrichtung unmittelbar folgenden, in Aufnahmelage befindlichen, das Teil aufnehmenden Hebel in seine Aufnahmelage und gleichzeitig der in Beschickungsrichtung folgende Hebel aus seiner Aufnahmelage in die Arbeitslage geschwenkt wird.

Eine Vorrichtung der eingangs genannten Art ist der DE-PS 29 30 053 zu entnehmen. Bei dieser Vorrichtung besteht jeder Hebel aus einem Steuerarm und einem Tragarm, wobei das schwerkraftbedingte Drehmoment des Steuerarms das in entgegengesetzter Richtung wirkende Drehmoment des Tragarms um soviel übersteigt, daß jeder Hebel beim Abheben der Last durch das überwiegende Drehmoment des Steuerarmes aus der Arbeitslage in die Aufnahmelage bewegt wird.

Eine derartige Vorrichtung weist einen konstanten Stapelabstand auf, der bei unterschiedlich dicken Lagergütern nicht variiert werden kann. Ferner ist es bei der bekannten Vorrichtung nicht möglich, die Stapelhöhe - als die Gesamtzahl der aufeinander gestapelten Lagergüter - zu verändern.

Aufgabe der vorliegenden Erfindung ist es, bei einer Vorrichtung der eingangs genannten Art den Stapelabstand und die Stapelhöhe variieren zu können, wobei die Vorrichtung das Lagern von Teilen sowohl in horizontaler als auch in vertikaler Richtung ermöglichen soll.

Die Aufgabe wird erfindungsgemäß durch die in den Patentansprüchen angegebenen Merkmale gelöst. Durch die besondere Ausbildung des gekröpften Steuerhebels ist es möglich, den jeweils in Beschicklungsrichtung vorhergehenden Tragarm in seine Aufnahmelage zu schwenken, wobei im Kröpfungsbereich eine V-förmige Anschlagfläche so ausgebildet ist, daß ein auf dem Tragarm angeordneter Mitnehmerstift in der Arbeits- und Ruhelage gegen die Innenseite der V-förmigen Anschlagfläche 5a,b,c anschlägt. Es ist dabei besonders vorteilhaft, daß die untere Anschlagfläche in der Arbeitslage so geneigt ist, daß Fremdkörper, die von der Lastaufnahmeseite in die Lagervorrichtung eindringen, an der schräg gestellten Anschlagfläche abrutschen. Im Betrieb ist dadurch eine positionsgenaue Endlage des Tragarms gewährleistet.

Die Bewegungen des Tragarms von der Aufnahme- in die Arbeitslage erfolgt durch die Belastung mit dem Lagergut. Im Entlastungsfalle schwenkt der Tragarm durch Federkraft zunächst in die Aufnahmelage und später dann bei Entlastung des in Beschickungsrichtung nachfolgenden Tragarms in die Ruhelage.

Die Höhenverstellung der Lagerung kann sowohl kontinuierlich in Nuten als auch diskontinuierlich durch Einstecken der Lagerachsen in verschiedenen in Beschickungsrichtung angeordneten Bohrungen der Säule, des Tragarms o.dgl. erfolgen. Die Fixierung des Lagerabstandes kann durch Klemmschrauben, Distanzstücke o.ä. vorgenommen werden.

Im folgenden wird die Erfindung anhand eines Ausführungsbeispieles näher erläutert. Es zeigen:

Fig. 1 = Längsschritt durch eine Stapelsäule,
Fig. 2 = Einzelansicht eines Steuerhebels,
Fig. 3 = Einzelansicht eines Tragarms,
Fig. 4 = Teilquerschnitt in Längsrichtung durch eine Stapelsäule,
Fig. 5 = Querschnitt in einer Tragarmebene.

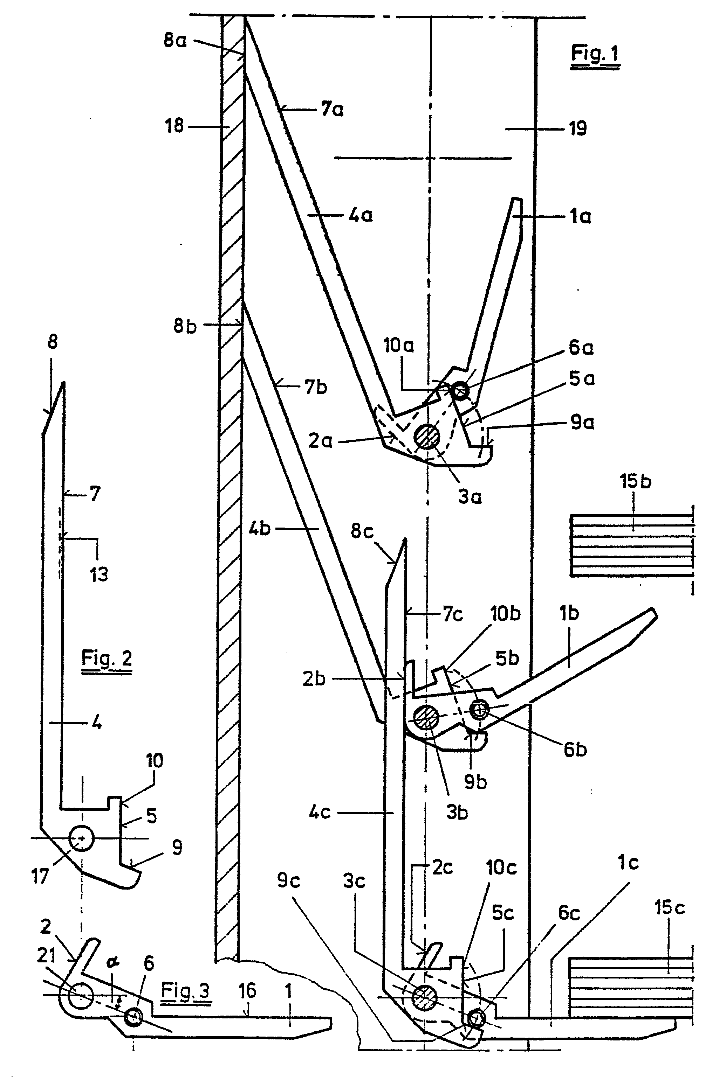

In Fig. 1 sind Tragarm 1a,b,c mit Anschlagfläche 2a,b,c auf einem Lagerbolzen 3a,b,c drehbar angeordnet. Auf dem gleichen Lagerbolzen sitzen gekröpfte Steuerhebel 4a,b,c, wobei die Kröpfung im Lagerbereich eine V-förmige Anschlagfläche 5a,b,c aufweisen. In der Ruhe- und Arbeitslage der Tragarme 1a,b,c kommt ein Mitnehmerstift 6a,b,c mit den V-förmigen Anschlagflächen 5a,b,c in Kontakt, und zwar in der Ruhelage mit dem oberen und in der Arbeitslage mit dem unteren Bereich der Anschlagfläche. Der untere Bereich der Anschlagfläche 9a,b,c der V-förmigen Anschlagfläche 5a,b,c ist in der Arbeitslage schräg nach unten geneigt, so daß in den Lagerbereich von der Seite des Lagergutes 15a,b,c her eingedrungene Fremdkörper nach außen abgeführt werden.

Aus Fig. 2 ist die Ausbildung des Steuerhebels 4 noch einmal deutlich zu erkennen. Die V-förmige Anschlagfläche 5 mit dem unteren Anschlag 9 für die Arbeitslage befindet sich im Kröpfungsbereich, wobei die obere Anschlagfläche 10 im wesentlichen parallel, jedoch bezogen auf die Lagerbohrung 17 spiegelbildlich zum Steuerhebel 4 verläuft. Zur Lastaufnahmeseite hin besitzt der Steuerhebel 4 eine Steuerfläche 7 für die Positionierung des darüber liegenden Tragarms in die Aufnahmelage. Unterhalb der Steuerfläche 7 befindet sich ein Endanschlag 13 für die Arretierung des auf gleichem Lagerbolzen befindlichen Tragarms 1a,b,c in Aufnahmelage, wobei die Arretierung über die V-förmige Anschlagfläche 5 erfolgt. Es ist ein besonderer Vorteil der Erfindung, daß sie ohne zusätzliche Arretierungselemente auskommt. Die Anschlagfläche 8 dient zur Abstützung des Steuerhebels 4 gegen die Rückwand 18 der Säule 19.

Fig. 3 zeigt den Tragarm 1 mit der Anschlagfläche 2 und dem Mitnehmerstift 6. Über die Länge der Anschlagfläche 2 wird der kleinste Abstand zwischen den Tragarmen bestimmt. Es ist ein besonderer Vorteil der erfindungsgemäßen Lösung, daß durch Trennung von Tragarm 1 und Steuerarm 4 und Anordnung beider Teile auf einer gemeinsamen Welle 3 die Bautiefe der Säule, Kragarm o.dgl. wesentlich verringert werden kann. Die Funktion von Tragarm 1 und Steuerarm 4 von Tragarm 1 und Steuerarm 4 wird dadurch gewährleistet, daß der Öffnungswinkel der V-förmigen Anschlagfläche 5 zwischen 95 und 120 ° liegt. Ferner ist es erforderlich, daß der Winkel zwischen der durch den Mittelpunkt der Bohrung 17 gehenden Parallelen zur Lastaufnahmefläche 16 und der Verbindungslinie zwischen Mitnehmerstift 6 in einem Bereich von α= 5-30° liegt. In diesem Winkelbereich ist auch die Selbstreinigung der erfindungsgemäßen Vorrichtung gewährleistet.

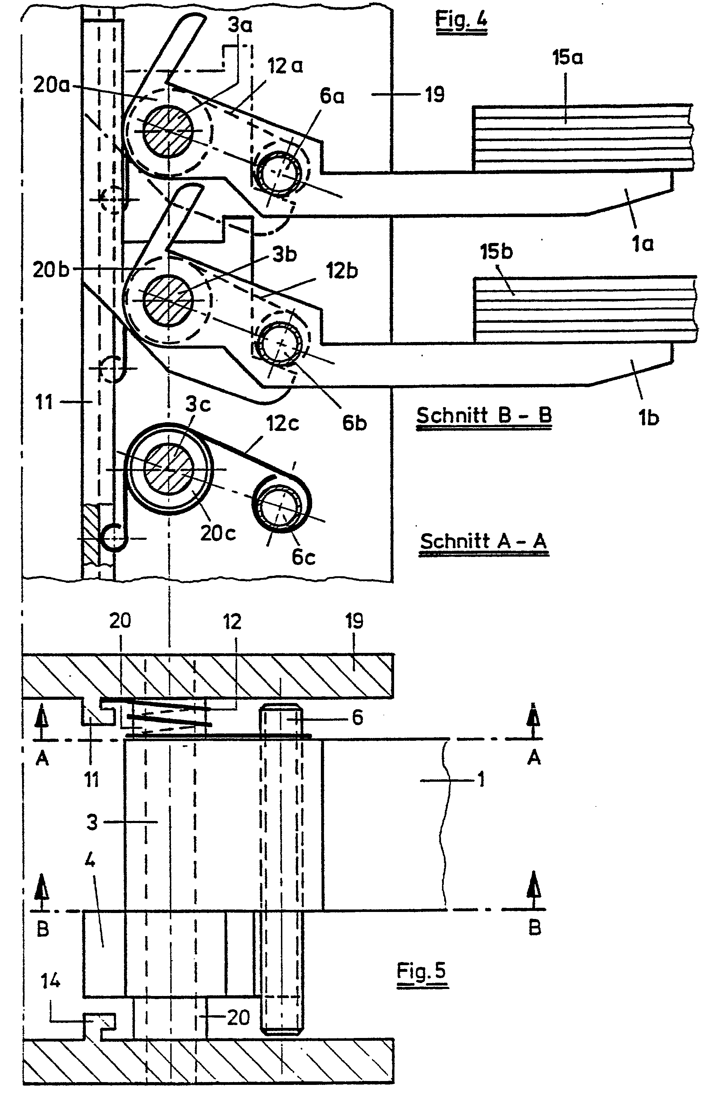

Der kleinste Abstand zwischen den Tragarmen ist in Fig. 4 dargestellt. Die Anschlagflächen 2a,b der Tragarme 1a,b sind in entsprechend dicht untereinander befindlichen Bohrungen fixiert. Auf den Lagerbolzen sind Federn 12a,b,c spiralförmig gewickelt. Falls erforderlich, können auch zusätzlich Distanzbuchsen 20 zwischen Feder und Lagerbolzen eingeschoben werden. Die Enden der Federn 12a,b,c stützen sich einerseits auf den Mitnehmerstift 6a,b,c und andererseits an einem Vorsprung 11 der Säule 19a,b. Die Federn 12a,b,c werden mit einer Vorspannung derart eingebaut, daß sie den Tragarm 1a,b in unbelastetem Zustand in die vertikale Ruhelage bringen.

Fig. 5 zeigt noch einmal aus anderer Sicht die Lagerung eines Tragarms 1 auf dem Lagerbolzen 3. Die Feder 12 ist um eine Distanzbuchse 20 gewickelt und stützt sich gegen den Vorsprung 11 der Säule 19 ab. Das andere Ende der Feder 12 umschlingt den Mitnehmerstift 6, der sich zur anderen Seite hin bis zum Steuerhebel 4 erstreckt. Aus den Fig. 1-5 ist ersichtlich, daß die Stellung der Tragarme 1 und der Steuerhebel 4 alternierend wechseln. Dies ist aus Gründen einer optimalen Platznutzung im Profil der Säule 19 erforderlich. In Fig. 5 ist der Vorsprung 14 für die benachbarten Federn gedacht, der aber nicht in allen Fällen benötigt wird.

**Patentansprüche**

1.Vorrichtung zum Lagern von Teilen (15) im Abstand zueinander, insbesondere zum Lagern von Blechen oder Blechformteilen in einer Beschickungsrichtung, bestehend aus mindestens einer Säule (19), Tragarm o. dgl., die um im wesentlichen waagerechte Lagerbolzen (3) schwenkbare, als Tragarme dienende Hebel aufweist, wobei ein beim Einlagern eines Teils in Ruhelage befindlicher Hebel von einem in Beschickungsrichtung unmittelbar folgenden, in Aufnahmelage befindlichen, das Teil aufnehmenden Hebel in seine Aufnahmelage und gleichzeitig der in Beschickungsrichtung folgende Hebel aus seiner Aufnahmelage in die Arbeitslage geschwenkt wird, dadurch gekennzeichnet daß jeder Hebel L-förmig ist und einen Tragarm (1a, b, c) aufweist, der als langer Hebelabschnitt zur Lastaufnahme dient, während der kurze Hebelabschnitt als Anschlagfläche (2a, b, c) dient und der Drehpunkt im Winkelbereich angeordnet ist, daß auf den Lagerbolzen (3a, b, c) neben dem Tragarm (1a, b, c) ein gekröpfter Steuerhebel (4a, b, c) schwenkbar gelagert ist, dessen Kröpfung im Lagerbereich eine v-förmige Anschlagfläche (5a, b, c) aufweist, mit der ein auf dem Tragarm (1a, b, c) befindlicher Mitnehmerstift (6a, b, c) beim Schwenken um den Lagerbolzen (3a, b, c) in Kontakt kommt und daß die Vorderseite jedes Steuerhebels (4a, b, c) zur Lastaufnahme hin jeweils eine Steuerfläche (7a, b, c) zur Positionierung des in Beschickungsrichtung davonliegenden Tragarms (1a, b, c) in die Aufnahmelage und einen Endanschlag (9a, b, c) zur Begrenzung der Arbeitslage des auf demselben Lagerbolzen befindlichen Tragarms sowie an der Hinterseite jeweils eine Anschlagfläche (8a, b, c) zur Begrenzung der Ruhelage des zugehörigen Tragarms über die V-förmige Anschlagfläche (5a, b, c) aufweist.

2. Vorrichtung nach Anspruch 1, dadurch gekennzeichnet, daß die gemeinsamen Drehachsen (3a,b,c) der Tragarme (1a,b,c) und Steuerhebel (4a,b,c) in der Säule, Kragarm o.dgl. zwischen 20 - 100 mm in beliebigem Abstand montierbar sind.

3. Vorrichtung nach einem der vorhergehenden Ansprüche, dadurch gekennzeichnet, daß die V-förmige Anschlagfläche (5a,b,c) einen unteren Anschlag (9a,b,c) für den Tragarm (1a,b,c) in der Lastposition und einen oberen Anschlag (10a,b,c) für die Ruhelage des Tragarms (1a,b,c) aufweist.

4. Vorrichtung nach einem der vorhergehenden Ansprüche, dadurch gekennzeichnet, daß die Tragarme (1a,b,c) je einen Mitnehmerstift (6a,b,c) aufweisen, der zwischen Drehpunkt und Lastaufnahmefläche des Tragarms angeordnet ist.

5. Vorrichtung nach einem der vorhergehenden Ansprüche, dadurch gekennzeichnet, daß um die Lagerbolzen (3a, b, c) je eine Feder (12a, b, c) spiralförmig gewickelt ist, deren Ende einerseits den Mitnehmerstift (6a, b, c) umschlingt und andererseits an einem Vorsprung (11) der Säule, Tragarm o.dgl. abgestützt ist, wobei der Tragarm (1a, b, c) über den Mitnehmerstift (6a, b, c) im unbelasteten Zustand in einer vertikalen Ruhelage gehalten wird.

6. Vorrichtung nach einem der vorhergehenden Ansprüche, dadurch gekennzeichnet, daß die untere Anschlagfläche (9) des Steuerhebels (4) in der Arbeitslage schräg zur Lastaufnahmeseite hin geneigt ist.

**Claims**

1. Device for storing parts (15) with spaces therebetween, especially for storing metal sheets or preformed metal sheets in a feed direction, consisting of at least one column (19), supporting arm or the like which has levers pivotable about essentially horizontal pivot pins (3) and serving as supporting arms, in which arrangement a lever located in the inactive position when a part is being stored is pivoted into its receiving position by a lever directly following in the feed direction, located in a receiving position and receiving the part, and at the same time the lever following in the feed direction is pivoted out of its receiving position into the working position, characterized in that each lever is L-shaped and has a supporting arm (1a, b, c) which serves as a long lever section for receiving load, while the short lever section serves as a stop surface (2a, b, c), and the fulcrum is arranged in the angled area, in that a cranked control lever (4a, b, c) is pivotably mounted on the pivot pin (3a, b, c) next to the supporting arm (1a, b, c), the crank of which control lever (4a, b, c), in the pivot area, has a V-shaped stop surface (5a, b, c) with which a driving pin (6a, b, c) located on the supporting arm (1a, b, c) comes into contact during the pivoting about the pivot pin (3a, b, c), and in that the front side of each control lever (4a, b, c), towards the load-receiving area, in each case has a control surface (7a, b, c) for moving the supporting arm (1a, b, c) lying in front of it in the feed direction into the receiving position and an end stop (9a, b, c) for limiting the working position of the supporting arm located on the Sine pivot pin and also, on the rear side, in each case a stop surface (8a, b, c) for limiting the inactive position of the associated supporting arm via the V-shaped stop surface (5a, b, c).

2. Device according to Claim 1, characterized in that the common fulcrum pins (3a, b, c) of the supporting arms (1a, b, c) and control levers (4a, b, c) can be mounted at any spacing between 20–100 mm in the column, cantilever or the like.

3. Device according to any of the preceding claims, characterized in that the V-shaped stop surface (5a, b, c) has a lower stop (9a, b, c) for the supporting arm (1a, b, c) in the load position and an upper stop (10a, b, c) for the inactive position of the supporting arm (1a, b, c).

4. Device according to any of the preceding claims, characterized in that the supporting arms (1a, b, c) each have a driving pin (6a, b, c) which is arranged between fulcrum and load-receiving surface of the supporting arm.

5. Device according to any of the preceding claims, characterized in that wound spirally around each pivot pin (3a, b, c) is a spring (12a, b, c) whose end on one side loops around the driving pin (6a, b, c) and on the other side is supported on a projection (11) of the column, supporting arm or the like, the supporting arm (1a, b, c) being held in the unloaded state in a vertical inactive position via the driving pin (6a, b, c).

6. Device according to any of the preceding claims, characterized in that the lower stop surface (9) of the control lever (4), in the working position, is inclined towards the load-receiving side.

**Revendications**

1. Dispositif pour stocker des pièces (15) à intervalle donné les unes des autres, notamment pour stocker des tôles ou des pièces en tôle formées dans une direction de chargement, constitué d'au moins une colonne (19), d'un bras porteur ou analogue, qui présente un levier, servant de bras porteur pouvant pivoter autour d'un axe de palier (3) sensiblement horizontal, un levier se trouvant en position repos est basculé en position réception par un levier acceptant la pièce, se trouvant en position de réception, qui suit immédiatement le premier, dans le sens du chargement et simultanément, le levier suivant dans le sens du chargement est basculé de sa position réception à sa position de travail, caractérisé en ce que chaque levier est en forme de L et présente un bras porteur (1a, b, c) qui sert à recevoir la charge en tant que partie de levier longue, tandis que la partie de levier courte sert de surface d'arrêt (2a, b, c) et le centre de rotation est disposé dans la zone d'angle, en ce qu'un levier de commande coudé (4a, b, c) est monté pivotant sur l'axe de palier (3a, b, c) à côté du bras porteur (1a, b, c), dont le coude dans la zone de palier présente une surface d'arrêt en forme de V (5a, b, c) avec laquelle vient en contact une tige d'entraînement (6a, b, c) se trouvant sur le bras porteur (1a, b, c) par basculement autour de l'axe de palier (3a, b, c), et en ce que la face avant de chaque levier de commande (4a , b, c) pour la réception de charge présente une surface commande (7a, b, c) pour positionner le bras porteur se trouvant devant (1a, b, c) dans le sens du chargement en position de réception, et une butée terminale (9a, b, c) pour délimiter la position de travail du bras porteur situé sur le même axe de palier et présente aussi sur la face arrière une surface d'arrêt (8a, b, c) pour délimiter la position de repos du bras porteur correspondant par l'intermédiaire de la surface d'arrêt en V (5a, b, c).

2. Dispositif selon la revendication 1, caractérisé en ce que les axes communs de rotation (3a, b, c) des bras porteurs (1a, b, c) et des leviers de commande (4a, b, c) sur la colonne, bras en porte-à-faux ou analogues, peuvent être montés avec un écartement quelconque compris entre 20 et 100 mm.

3. Dispositif selon l'une des revendications précédentes, caractérisé en ce que la surface d'arrêt en V (5a, b, c) présente une butée inférieure (9a, b, c) pour le bras porteur (1a, b, c) en position de charge, et une butée supérieure (10a, b, c) pour la position repos du bras porteur (1a, b, c).

4. Dispositif selon l'une des revendications précédentes, caractérisé en ce que les bras porteurs (1a, b, c) présentent chacun une tige d'entraînement (6a, b, c) qui est disposée entre le centre de rotation et la surface de réception de la charge du bras porteur.

5. Dispositif selon l'une des revendications précédentes, caractérisé en ce qu'autour de chaque axe de palier (3a, b, c) est enroulé un ressort en spirale (12a, b, c) dont une extrémité entoure la tige d'entraînement (6a, b, c) et dont l'autre extrémité s'appuie sur un épaulement (11) de la colonne, du bras porteur ou analogue le bras porteur (1a, b, c)étant ainsi maintenu en positon de repos verticale à l'aide de la tige d'entraînement, en l'absence de charge.

6. Dispositif selon l'une des revendications précédentes, caractérisé en ce que la surface d'arrêt inférieure (9) du levier de commande (4) est inclinée en biais du côté de la réception de charge.

Fig. 1

Fig. 2

Fig. 3

Fig. 4

Schnitt B – B

Schnitt A – A

Fig. 5